Europäisches Patentamt

European Patent Office

Office européen des brevets

(19)

(11) **EP 0 749 669 B1**

(12) **EUROPÄISCHE PATENTSCHRIFT**

(45) Veröffentlichungstag und Bekanntmachung des Hinweises auf die Patenterteilung:
**19.11.1997 Patentblatt 1997/47**

(21) Anmeldenummer: **95912120.3**

(22) Anmeldetag: **02.03.1995**

(51) Int Cl.⁶: **H04Q 11/04**, **H04M 11/06**

(86) Internationale Anmeldenummer:
**PCT/DE95/00268**

(87) Internationale Veröffentlichungsnummer:
**WO 95/24811 (14.09.1995 Gazette 1995/39)**

(54) **VERFAHREN UND VORRICHTUNG ZUR VERGRÖSSERUNG DER REICHWEITE DES ÜBERTRAGUNGSWEGES ZWISCHEN FUNKTIONSEINHEITEN DES ISDN-TEILNEHMERANSCHLUSSES**

PROCESS AND DEVICE FOR INCREASING THE WORKING RANGE OF THE TRANSMISSION PATH BETWEEN FUNCTIONAL UNITS OF AN ISDN SUBSCRIBER CONNECTION

PROCEDE ET DISPOSITIF DESTINES A ACCROITRE LA PORTEE DE LA VOIE DE TRANSMISSION ENTRE DES UNITES FONCTIONNELLES DE L'ACCES D'ABONNE AU RNIS

(84) Benannte Vertragsstaaten:
**DE ES FR GB SE**

(30) Priorität: **06.03.1994 DE 4407214**
**01.03.1995 DE 19506906**

(43) Veröffentlichungstag der Anmeldung:
**27.12.1996 Patentblatt 1996/52**

(73) Patentinhaber: **DTM DATA TELEMARK GMBH**
**10117 Berlin (DE)**

(72) Erfinder:
• **GEISZLER, Roland**
**D-01309 Dresden (DE)**
• **HELBIG, Klaus**
**D-12459 Berlin (DE)**
• **WULST, Norbert**
**D-01877 Bischofswerda (DE)**

(74) Vertreter: **Uhlemann, Henry, Dipl. Chem.**
**Patentanwalt,**
**Würzburger Strasse 51**
**01187 Dresden (DE)**

(56) Entgegenhaltungen:
**GB-A- 2 249 927**

• **INTERNATIONAL CONFERENCE ON COMMUNICATIONS, INCLUDING SUPERCOMM TECHNICAL SESSIONS. ATLANTA, APR. 15 - 19, 1990, Bd. 4 OF 4, 15. April 1990 INSTITUTE OF ELECTRICAL AND ELECTRONICS ENGINEERS, Seiten 1637-1642, XP 000146059 TZUNG-PAO LIN 'RESIDENTIAL ISDN SERVICES: INFORMATION SERVICE ARCHITECTURE'**
• **ICC'84, LINKS FOR THE FUTURE, Bd. 2, 14. Mai 1984 AMSTERDAM, NL, A. TERMOTE ET AL. 'ISDN Field Trial in the Belgian Network'**
• **BELL LABORATORIES TECHNICAL JOURNAL, Bd. 63, Nr. 10-2, Dezember 1984 Seiten 2283-2331, M.M. LUNIEWICZ ET AL. 'The SLC 96 Subscriber Loop carrier System: Channel Bank'**
• **SIEMENS COMPONENTS, Bd. 22, Nr. 2, April 1987 MUNCHEN DE, Seiten 65-69, B. MÜLLER 'Communications Devices Cope with Digital Transmission'**

**Beschreibung**

Die Erfindung betrifft ein Verfahren und eine Vorrichtung zur Vergrößerung der Reichweite des Übertragungsweges zwischen Funktionseinheiten des ISDN-Teilnehmeranschlusses bezogen auf eine oder mehrere gleichartige ISDN-Schnittstellen, wie sie beispielsweise nach CCITT I.400 - ISDN User Network Interface und I.430 - Basic User Network Interface standardisiert sind. Damit ist es möglich, die vielfältigen ISDN-Dienste über weite Entfernungen zu übertragen.

Das ISDN (Integrated Services Digital Network), das neben dem Fernsprechen auch die schnelle Übertragung von Daten, Texten und Bildern ermöglicht, gibt an seinen Schnittstellen die Möglichkeit des Anschlusses von NT- und TE-Geräten sowie weiterer Verteilernetze.

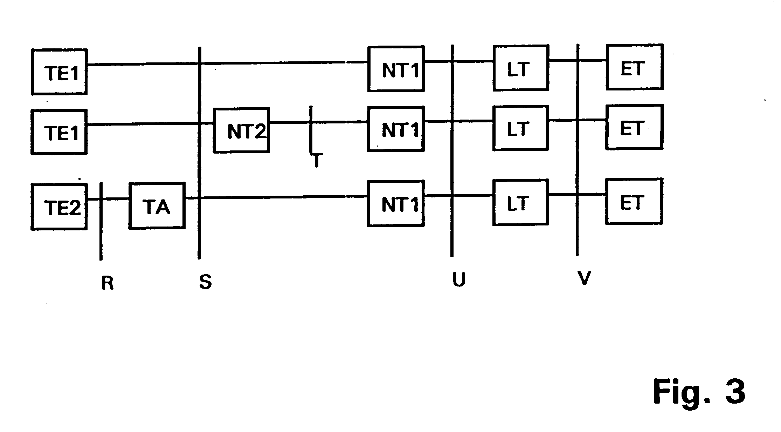

Zur funktionellen Abgrenzung der im Teilnehmeranschluß verwendeten Elemente dient die Bezugskonfiguration (Reference Configuration) der CCITT. Figur 3 gibt die Bezugskonfiguration für den ISDN-Teilnehmeranschluß mit den Bezugspunkten R, S, T, U und V wieder.

Die funktionellen Einheiten nach Figur 3 bezeichnen im einzelnen:

| | |
|---|---|
| ET, Exchange Termination: | Vermittlungstelle des Netzwerkes führt Teilnehmer-Netz-Zeichengabe auf der Netzseite durch. |
| LT, Line Termination: | Leitungsabschluß bildet auf der Netzseite den übertragungstechnischen Abschluß der Strecke von der Vermittlungsstelle zum Teilnehmeranschluß. Er wird manchmal als Teil der ET betrachtet und dann nicht gesondert dargestellt. |
| NT1, Network Termination 1: | Ist der übertragungstechnische Abschluß von LT zum Teilnehmeranschluß, kann vom Netzbetreiber gesteuert werden, isoliert den Endsystemanschluß von der Übertragungstechnik des Teilnehmeranschlusses. |
| NT2, Network Termination 2: | Falls vorhanden, Vermittlungs- bzw. Konzentratorfunktionen in der Ausprägung einer TK-Anlage. |
| TE1, Terminal Equipment Typ 1: | Entspricht den ISDN-Schnittstellen und arbeitet direkt an NT1 bzw. NT2. |
| TE2, Terminal Equipment Typ 2: | Ist ein konventionelles Endgerät mit analoger Schnittstelle, für den Betrieb am ISDN wird ein Endsystemadapter (Terminal Adapter, TA) benötigt, der den Zugang zum ISDN herstellt. |

Diese Bezugskonfiguration identifiziert die notwendigen Funktionen unabhängig von technischen Einzelheiten und klärt ihre relative Lage zueinander.

Zwischen den dadurch gebildeten Funktionseinheiten (Functional Groups) werden Bezugspunkte (Reference Points) definiert, die die Funktionseinheiten voneinander trennen. Der Bezugspunkt V befindet sich zwischen Vermittlungsstelle und Leitungsabschluß, der Bezugspunkt U zwischen Leitungsabschluß und Netzabschluß, der Bezugspunkt T zwischen Netzabschluß 1 und 2, der Bezugspunkt S zwischen Netzabschuß und Endsystem Typl und der Bezugspunkt R zwischen Endsystemadapter und Endsystem Typ 2. Für den Bezugspunkt U gibt es national genormte Schnittstellen, für die Bezugspunkte S und T gibt es international genormte Schnittstellen.

An den Schnittstellen des ISDN-Teilnehmeranschlusses sind dabei eine Vielzahl von Funktionen zu realisieren. Eine So-Schnittstelle muß beispielsweise folgende Funktionen erfüllen:

- für jede Übertragungsrichtung zwei Adern (Kupfer);
- Bruttoübertragungsgeschwindigkeit der AMI-codierten Signale für jede Richtung 192 kbit/s;
- Netto-Datenrate (2B+ D)= 144 kbit/s (48 kbit/s für Synchronisation und Steuerung);
- Schrittakt: Ableitung aus dem Bitstrom = 192 kbit/s
- Oktettakt: abgeleitet aus 192 kbit/s = 8 kHz (für Sprachcodierung)
- Rahmensynchronisation: (realisiert durch Code-Verletzungen zwecks Wiedergewinnung der Zeitmultiplexkanäle)
- D-Echokanal: (dient dem geordneten Zugriff der TE auf den D-Kanal)
- Aktivierung und Deaktivierung (Wechsel zwischen Betriebs- und Ruhezustand).

Rahmenaufbau und Codierung der zu übertragenden Bits unterliegen einer festgelegten Regel. Gemäß der Regeln der HDLC wird die zu transportierende Information in einen oder mehreren Rahmen (Frame) verpackt, die jeweils mit einer besonderen Bitfolge beginnen und auch beendet werden. Nach festgelegten Schemata werden die Prozeduren wie Rahmensynchronisierung, Überrahmensteuerung, Zugriffsteuerung, Fernspeisung, Aktivierung und Deaktivierung realisiert.

Unabhängig einer netzseitigen Verknüpfung von ISDN-Endeinrichtungen (TE) oder Netzabschlüssen (NT) ist es von Vorteil, die Reichweite des Übertragungsweges zwischen Funktionseinheiten des ISDN-Teilnehmeranschlusses bezogen auf einen oder mehrere ISDN-Basisanschlüsse $S_o$ oder andere ISDN-Schnittstellen zu verlängern, um die in einem Netz anliegenden Informationen über eine längere Strecke weitergeben zu können. Dabei ist jedoch die erzielbare Reichweite mit herkömmlichen Mitteln aufgrund der elektrischen Eigenschaften der ISDN-Schnittstellen und -verbindungswege wesentlich eingeschränkt. Bisher ist es beispielsweise nicht möglich; eine $S_o$-Schnittstelle über mehr als 1000 m (Punkt-zu-Punkt-Verbindung) oder eine $U_{ko}$-Schnittstelle ohne Zwischenschaltung von Verstärkern über mehr als 6 km zu betreiben. Das heißt, die Reichweite des Übertragungsweges zwischen den Funktionseinheiten des ISDN-Teilnehmeranschlusses bezogen auf eine oder mehrere ISDN-Schnittstellen ist begrenzt.

Nach GB-A-2 249 927 ist ein ein Verfahren zur Umwandlung von Informationen geringerer Datendichte in Informationen höherer Datendichte bekannt. Dabei wird das beim ISDN bislang übliche Pulscodemodulationsverfahren angewandt und Daten mehrerer Kanäle durch ein Primärmultiplexverfahren gebündelt übertragen. Das ISDN-typische Taktschema wird nicht verlassen. Bei weiten Übertragungsstrecken würde der Verbindungsaufbau abreißen und keine Kommunikation zustande kommen. Aus ICC'84, LINKS FOR THE FUTURE, Bd. 2, Amsterdam 1984 ist eine Einrichtung bekannt, die über eine U-Schnittstelle die Vermittlungsfunktion zu verschiedenen S-Schnittstellen bietet. Diese Vermittlungsfunktion setzt ein entsprechendes Adressierungsschema und die aktive Auswertung des D-Kanals und damit einen Eingriff in die Schicht-2-Information voraus. Sämtliche Übertragungsfunktionen basieren auf der ISDN-typischen Datenstruktur, das angewandte Zeitmultiplexverfahren ist nicht für weite Übertragungsstrecken geeignet.

Nach Standard CCITT I.400 ist die Signallaufzeit z.B. zwischen den Funktionseinheiten NT und TE und zurück zwischen minimal 10 µs und maximal 14 µs festgelegt. Hierbei spielt vor allem der 2-Bit-Rahmenversatz eine Rolle, der zur Taktrückgewinnung dient (Rahmenversatz = Code-Verletzung als Kennzeichen für den Rahmenbeginn).

Um eine Kollision zu erkennen, muß der Rahmenbeginn (2 Bit) in etwa 70 % der Signallaufzeit erkannt werden.

- für 2 Bit = 10,416666 µs
- mit Rückantwort = 3,6458331 µs

Unter der Annahme einer Wellendämpfung von 7,6 dB/km für Kupfer beträgt die Signallaufzeit T = 9 µs/km. Damit ergibt sich

$$I \leq \frac{t_{Umlauf}/2}{T} = \frac{3,6\ \mu s/2}{9\ \mu s/km} = 0,2\ km$$

für die maximale Ausdehnung des So-Anschlusses. Diese Rechnung gilt für den Fall der Punkt-zu-Mehrpunkt-Konfiguration. Die Rechnung für die Punkt-zu-Punkt-Konfiguration (keine Kollisionserkennung) ergibt in Analogie 1 km.

Die Zeitverhältnisse für die Übertragung über einen Satellitenkanal hinsichtlich der Kollisionserkennung ändern sich nicht. Es ändert sich jedoch die Signallaufzeit bei einer Verbindung über einen geostationären Satelliten (≈ 36.000 km). Diese beträgt in einer Richtung 220 ms und mit Rückantwort 440 ms. Diese Zeitverhältnisse zeigen, daß auf diesem Weg eine direkte Verlängerung der Reichweite des Übertragungsweges zwischen Funktionseinheiten des ISDN-Teilnehmeranschlusses ausgehend von einem Basisanschluß So unmöglich ist.

Aufgabe der Erfindung ist es deshalb, ein Verfahren und eine Vorrichtung zu schaffen, die es gestatten, die Reichweite des Übertragungsweges zwischen Funktionseinheiten des ISDN-Teilnehmeranschlusses zu vergrößern. Dies bei Erhaltung aller ISDN-typischen Merkmale, wie:

- Aufrechterhaltung des Netztaktes
- Mehrfachzugriff auf den Schnittstellenbus
- Aktivierung und Deaktivierung der Schnittstelle.

Erfindungsgemäß wird die Aufgabe zur Vergrößerung der Reichweite des Übertragungsweges zwischen Funktionseinheiten des ISDN-Teilnehmeranschlusses bezogen auf eine oder mehrere gleichartige ISDN-Schnittstellen n durch ein Verfahren gelöst, bei dem

a) die Datensendung netzseitig so erfolgt, daß die an den jeweiligen ISDN-Schnittstellen auflaufenden ISDN-spezifisch kodierten Daten mittels jeweils eines Kodewandlers in binär kodierte Daten getrennt nach B- und D-Kanalinformationen umgewandelt werden,

EP 0 749 669 B1

b) aus den auflaufenden binär kodierten Daten der B- und D-Kanäle mittels einer Speichereinrichtung Blöcke für die jeweilige ISDN-Schnittstelle, ergänzt um eine Kennzeichnung für diese Schnittstelle, gruppiert und einem Übertragungsmittel in aus dem ISDN-spezifischen Takt einer festgelegten ISDN-Schnittstelle abgeleiteten Zeitabständen nacheinander zugeführt und über ein Übertragungsmittel der Empfängerseite bitweise getaktet entweder mit einem unabhängigen erzeugten Takt oder mit einem aus dem ISDN-spezifischen Takt abgeleiteten Takt übermittelt werden,

c) terminalseitig mittels eines Taktrückgewinnungsmittels entweder aus der zeitlichen Abfolge der empfangenen Datenblöcke oder aus der zeitlichen Abfolge der über-tragenen Datenbits, die zur Kommunikation von Sender und Empfänger notwendigen ISDN-spezifischen Takte zurückgewonnen werden und

d) die empfangenen Blöcke entsprechend ihrer Kennzeichnung in einer Speichereinrichtung zwischengespeichert werden, der betreffenden ISDN-Schnittstelle zugeordnet und übergeben werden und anschließend die B-Kanalinformation entsprechend dem rückgewonnenen Takt und die D-Kanalinformation, sofern vorhanden, dem Kodewandler zugeführt und die binär kodierten Daten in ISDN-spezifisch kodierte Daten umgewandelt werden und

e) terminalseitig die Datensendung analog der Verfahrensschritte a) und b) erfolgt, wobei der in b) benannte ISDN-spezifische Takt derjenige ist, der nach Verfahrens-schritt c) zurückgewonnen wird und

f) netzseitig die empfangenen Datenblöcke entsprechend ihrer Kennzeichnung der Speichereinrichtung der betreffenden ISDN-Schnittstellen zugeordnet und übertragen werden und mittels eines Kodewandlers entsprechend dem netzseitig vorgegebenen ISDN-spezifischen Takt die Umwandlung der binär kodierten Daten in ISDN-spezifisch kodierte Daten erfolgt.

Vorzugsweise erfolgt die Blockbildung nach Schritt b des Verfahrens in der Weise, daß die gebildeten Blöcke gleiche Länge haben und B-Kanal- und D-Kanaldaten ein Teilungsverhältnis aufweisen, das dem Verhältnis der Kapazitäten von B- und D-Kanälen der ISDN-Schnittstelle entspricht.

Für die Zeiten, in denen der D-Kanal keine Information trägt, erfolgt die Blockbildung in gleicher Länge ohne D-Kanaldaten.

Für Zeiten, in denen die ISDN-Schnittstelle n nicht aktiv ist, erfolgt die Blockbildung in der Weise, daß gleichlange Blöcke fester Länge gebildet werden. Diese Blöcke tragen keine relevanten Informationen, sie dienen lediglich der Aufrechterhaltung der Kommunikationsfähigkeit zwischen Netz- und Terminalseite.

Ein aktiver Eingriff in die D-Kanal-Signalisierung erfolgt für die Fälle, bei denen die Signallaufzeit der D-Kanal-Signalisierung über die genutzten Übertragungskanäle zu groß ist. In diesen Fällen wird dem aktivierenden Teilnehmer signalisiert, daß die Verbindung noch nicht aufgebaut ist.

Die Länge der nach Verfahrensschritt b) gebildeten Blöcke ist abhängig von der Kapazität der Verarbeitungseinheiten zur Wandlung, Übermittlung und Rückwandlung der ISDN-Schnittstelleninformationen sowie der ISDN-spezifischen Kanalkapazitäten.

Die gebildeten Blöcke werden der Empfängerseite bitweise getaktet entweder mit einem unabhängigen erzeugten Takt oder mit einem in der Steuereinrichtung aus dem ISDN-spezifischen Takt abgeleiteten Takt mittels bekannter Übertragungseinrichtungen über Satelliten oder andere Übertragungskanäle übermittelt.

Bei der Blockübertragung wird gemäß CCITT I.400 zur sicheren Unterscheidung der Flags (01111110) von den Informationsbytes in den Blöcken dort eine "0" im Bitstrom eingefügt, wo mehr als 5 mal "1" aufeinander folgen. Dadurch wird die real notwendige Bitrate größer. Um die Wahrscheinlichkeit für diese Erscheinung zu senken, werden vorzugsweise die Blöcke vor und nach der Übertragung mit einem exklusivem Oder verknüpft. Dabei werden vordefinierte Bytes mit wechselnder Bitwertigkeit benutzt.

Die Taktrückgewinnung nach Schritt c des Verfahrens erfolgt dann, wenn das Übertragungssystem den Übertragungstakt selbst bestimmt, in der Form, daß aus der zeitlichen Abfolge der empfangenen Datenblöcke ein Vergleichstakt gewonnen wird, mittels dessen nach bekannten Prinzipien in einer Phase Looked Loop (PLL) ein Grundtakt erzeugt wird, aus welcher in einer das Verfahren realisierenden Vorrichtung der Takt für die ISDN-Schnittstellen n terminalseitig abgeleitet wird.

Wenn der Bittakt für das Übertragungssystem durch eine das Verfahren realisierende Vorrichtung vorgegeben werden kann, wird vorzugsweise dieser Grundtakt für die ISDN-Schnittstelle aus dem Bitübertragungstakt mittels PLL zurückgewonnen.

Sowohl die terminal- und netzseitige Wandlung der ISDN-spezifisch kodierten Daten in binär kodierte Daten erfolgt nach bekannten Prinzipien mittels eines Kodewandlers, vorzugsweise eines ISDN-Subscriber Access Controler.

Erfindungsgemäß erfolgt die Realisierung des Verfahrens zur Vergrößerung der Reichweite des Übertragungsweges zwischen Funktionseinheiten mehrerer ISDN-Teilnehmeranschlüsse durch eine Vorrichtung, die sowohl terminal- als auch netzseitig aus einer Einrichtung zur Protokollwandlung und diesem zugeordneten Übertragungskanal besteht.

Der Übertragungskanal besteht aus an sich bekannten Übertragungseinrichtungen und dem zur Übertragung genutzten Medium, z.B. einem Satellitenkanal mit den entsprechenden Sende- und Empfangseinrichtungen sowie den dafür erforderlichen Modems.

Die Einrichtungen zur Protokollwandlung kommunizieren über den jeweils zugeordneten Übertragungskanal miteinander. Die Einrichtungen zur Protokollwandlung sind vorzugsweise gleich aufgebaut und können sowohl im Mastermode als auch im Slavemode fungieren, wobei jeweils die netzseitig angeschlossene Einrichtung zur Protokollwandlung im Mastermode und die terminalseitige Einrichtung zur Protokollwandlung im Slavemode arbeitet. Möglich ist aber auch ein Aufbau der Einrichtungen zur Protokollwandlung ausschließlich im Master- oder im Slave-Mode, wobei netzseitig eine im Mastermode arbeitende Einrichtung und terminalseitig eine im Slavemode arbeitende Einrichtung vorhanden sein muß.

Die Einrichtungen zur Protokollwandlung bestehen im wesentlichen aus

entsprechend der Zahl n der zu verbindenden ISDN-Schnittstellen angeordneten Schnittstellenmodulen (1),
einem Mikrorechner (66) ,
einem Schnittstellenmodul (2) für den Übertragungskanal X,
einem Modul zur Taktgenerierung (3),
einer PIO (92),
einem Modeschalter (5),
einer Stromversorgung (4),
sowie entsprechenden elektrischen Verbindungen und einem Bus für den Adress- und Datenaustausch.

Der Mikrorechner (66) ist über einen Bus (b) mit den ISDN-Schnittstellenmodulen (1) und über den Bus (b) mit dem parallelen Input-Output-Baustein PIO (92) sowie mit dem Schnittstellenmodul (2) für den Anschluß an den Übertragungskanal X verbunden.

Der Modul zur Taktgenerierung (3) ist mit den Schnittstellenmodulen (1) und mit dem Schnittstellenmodul (2) für den Anschluß an den Übertragungskanal (X) sowie über den PIO-Baustein (92) mit dem Mikrorechner (66) über den Bus (b) verbunden.

Der Schalter (5) für die Modeeinstellung (Master/Slave) wirkt ein auf die Stromversorgung (4), auf die Schnittstellenmodule (1) und auf den Modul (3) zur Taktgenerierung.

Die Stromversorgung (4) versorgt die Schaltung mit Spannung und erzeugt, wenn der Protokollwandler im Slavemode arbeitet, die Versorgungsspannung für netzunabhängige Endgeräte.

Jeder ISDN-Schnittstellenmodul (1) setzt elektrisch die ISDN-Schnittstelle in eine binär kodierte Form um und umgekehrt. Die binären Daten sowie notwendige Steuerinformationen werden Über den Bus (b) zwischen Schnittstellenmodul (1), dem Mikrorechner (66), der PIO (92) und dem Schnittstellenmodul (2) ausgetauscht. Der ISDN-Schnittstellenmodul (1) ist aus einem ISDN-Schnittstellen-Interface und einem Schaltkreis zur Wandlung der ISDN-spezifisch kodierten Daten in binär kodierte Daten, beispielsweise einem ISDN-Subscriber Access Controler (ISAC-Schaltkreis) aufgebaut. Der Schnittstellenmodul (2) für die Übertragung auf dem X-Kanal besteht aus einem Schnittstelleninterface und einem seriellen Input-Output-Baustein SIO.

Der Mikrorechner (66) besteht aus einem Mikroprozessor, einem ROM zur Speicherung des Programmkodes, einem RAM als Arbeitsspeicher, und einem BUS (b). Über den BUS (b) ist der Mikrorechners (66) mit dem parallelen Input-Output-Baustein PIO (92), mit den ISAC-Schaltkreisen in den Schnittstellenmodulen (1) sowie mit dem seriellen Input-Output-Baustein SIO im Schnittstellenmodul (2) verbunden.

Der Prozessor im Mikrorechner (66) steuert die Funktion dser Bauelemente PIO (92), ISAC-Schaltkreis im Schnittstellenmodul (1) und SIO im Schnittstellenmodul (2) in bekannter Weise durch Einstellung der dafür vorgesehenen Register in diesen Bauelementen.

Im Falle der Ausführung der Einrichtungen zur Protokollwandlung ausschließlich im Slave- oder im Mastermode bestehen diese aus nahezu den gleichen Baugruppen wie vorgenannt aufgeführt. Es entfällt der Schalter (5) für die Modeeinstellung. Die übrigen Baugruppen sind so geschalten, daß sie die Funktionen im Slave- bzw. Mastermode wie vorgenannt dargelegt, erfüllen.

Netzseitig arbeitet die Einrichtung zur Protokollwandlung im Master -Mode wie folgt:

In den Schnittstellenmodulen (1) erfolgt im ISDN-Interface die wechselseitige Umwandlung der Signalpegel von der ISDN-Schnittstelle auf die vom ISAC-Baustein benötigten Signalpegel.

Mit dem Modeschalter (5) werden die ISAC-Bausteine in allen Schnittstellenmodulen (1) in den TE-Mode (Terminal-Mode) geschaltet. In diesem Mode erzeugt der ISAC-Schaltkreis einen Takt 512 kHz am Ausgang DCL. Wenn die ISDN-Schnittstelle aktiv ist, so wird der Takt 512 kHz synchron aus dem Bittakt der ISDN-Schnittstelle abgeleitet.

Der Takt 512 kHz jedes Schnittstellenmoduls wird an den Modul zur Takterzeugung (3) geleitet. Durch den Prozessor des Mikrorechners (66) wird der Schnittstellenmodul (1) mit der niedrigsten logischen Adresse bestimmt, dessen ISDN-Schnittstelle aktiv ist. Der Takt 512 kHz vom ISAC-Schaltkreis genau dieser ISDN-Schnittstelle wird, gesteuert durch den Prozessor im Mikrorechner (66), im Modul zur Takterzeugung (3) benutzt, um durch Teilung einen symmetrischen Takt zu erzeugen. Dieser Takt wird auf ein Port der PIO (92) dem Mikrorechner (66) zugeführt.

Der ISAC-Schaltkreis im jeweiligen Schnittstellenmodul (1) wandelt die ternär kodierten B- und D- Kanal- Signale von der ISDN-Schnittstelle n, sofern diese aktiv ist, in binär kodierte Signale um und speichert diese byteweise in seinen Registern ab. Umgekehrt wandelt der Baustein die vom Prozessor eingegebenen binär kodierten B- und D- Kanal-Bytes in ternäre Signale um und sendet diese Daten an das Interface des betreffenden Schnittstellenmoduls (1) zur Übertragung auf der ISDN-Schnittstelle n.

Der ISAC-Schaltkreis signalisiert durch ein Register, daß er bereit ist zur Übernahme je eines neuen B1- und B2-Kanal-Bytes und gleichzeitig je ein vollständiges B1 und B2- Kanal-Byte zur Übernahme durch den Prozessor im Mikrorechner (66) bereit steht. Der Prozessor im Mikrorechner (66) fragt das Signalisierungs-Register des ISAC-Schaltkreis zyklisch ab und übernimmt die fertigen B-Kanal-Bytes in seinen Arbeitsspeicher beziehungsweise übergibt die B-Kanal-Bytes.

Der ISAC-Schaltkreis signalisiert durch ein weiteres Register, wenn ein D-Kanal-Frame von der betreffenden ISDN-Schnittstelle empfangen wurde. Der Prozessor im Mikrorechner (66) fragt dieses Signalisierungsbyte ebenfalls zyklisch ab und übernimmt gegebenenfalls den D-Kanal-Frame auf seinen Arbeitsspeicher.

Hat der Prozessor im Mikrorechner (66) einen D-Kanal-Frame von der Gegenstelle empfangen, dann übergibt er seinerseits diese Bytes an den ISAC-Schaltkreis zur Weiterleitung an die ISDN-Schnittstelle.

Aus den vom ISAC-Schaltkreis übernommenen Bytes bildet der Prozessor Blöcke und speichert diese im RAM des Mikrorechners (66) zwischen.

Der Prozessor im Mikrorechner (66) erhält von der PIO (92) immer dann ein Interrupt-Signal, wenn sich am Takteingang der PIO (92) der Signalwert ändert. Bei jedem solchen Signal wird der erste Teil eines neuen Blockes an die SIO im Schnittstellenmodul (2) übergeben und dann ein Steuerregister in der SIO gesetzt, wodurch dieser Baustein veranlaßt wird, die Übertragung dieses Blockes zu beginnen. Die SIO zeigt in ihrem Register an, wann die nächsten Abschnitte des Blockes übergeben werden sollen, damit die Übertragung nicht abbricht. Der Prozessor im Mikrorechner (66) liest dieses Register zyklisch und führt der SIO im Schnittstellenmodul (2) entsprechend die weiteren Abschnitte des Blockes zu.

Der Prozessor übergibt der SIO im Schnittstellenmodul (2) Blöcke in fortlaufender Reihenfolge entsprechend der zyklisch wiederholten logischen Adressen der ISDN-Schnittstellen n. Alle ISDN-Schnittstellen arbeiten synchron auf der Basis des zentralen Netztaktes des ISDN, so daß auch die Blöcke synchron erzeugt werden.

In umgekehrter Richtung empfängt die SIO im Schnittstellenmodul (2) bitserielle Daten über das Interface im Schnittstellenmodul (2). Wenn in der SIO der erste Abschnitt eines neuen Blockes oder weitere Abschnitte eines Blockes empfangen wurden, so werden entsprechende Signalisierungsbits in einem Register der SIO gesetzt. Der Prozessor des Mikrorechners (66) fragt dieses Register zyklisch ab. Wenn der Empfang eines Blockes angezeigt wird, so übernimmt der Prozessor diesen Block abschnittsweise in seinen Arbeitsspeicher RAM. Die Blöcke werden geordnet nach ihrer im Steuerbyte codierten logischen Adresse abgespeichert. Pro logischer Adresse werden mehrere zuletzt empfangene Blöcke zwischengepuffert.

Durch die SIO im Schnittstellenmodul (2) wird über interne Register signalisiert, daß ein B-Kanal-Byte an den ISAC-Schaltkreis zu übergeben ist zur Übertragung auf die ISDN-Schnittstelle n. Der Prozessor des Mikrorechners (66) fragt diese Register aller ISAC-Schaltkreise zyklisch ab und übergibt dann entsprechend die B-Bytes an den jeweiligen ISAC-Schaltkreis.

Die D-Kanal-Bytes in den vom Schnittstellenmodul (2) empfangenen Blöcken werden an die bekannten D-Kanal-Register des ISAC-Schaltkreis im Schnittstellenmodul (1) übergeben.

Terminalseitig arbeitet die Einrichtung zur Protokollwandlung im Slave -Mode wie folgt:

Im Schnittstellenmodul (1) erfolgt im Schnittstellen-Interface die wechselseitige Umwandlung der Signalpegel von der jeweiligen ISDN-Schnittstelle n auf die vom Baustein ISAC-Schaltkreis benötigten Signalpegel.

Durch die Mode-Einstellung (5) wird der ISAC-Schaltkreis in den Schnittstellenmodulen (1) in den NT-Mode (NetworkTerminal-Mode) geschaltet. In diesem Mode benötigt der ISAC-Schaltkreis synchrone Takte an den Eingängen DCL von 512 kHz, FSC1 und FSC2 von 8 kHz. Aus diesen leitet der ISAC-Schaltkreis die Rahmensynchron- und Bitsynchrontakte für die ISDN-Schnittstelle ab.

Im Modul zur Takterzeugung (3) wird aus der Folge der Zeitpunkte, zu denen die Blöcke vom Mastergerät her eintreffen, ein Takt abgeleitet. Aus diesem Takt werden im Modul zur Takterzeugung (3) mittels nach bekannten Prinzipien arbeitender PLL ein Takt 512 kHz und daraus durch Teilung ein Takt von 8 kHz erzeugt. Diese Takte werden an die entsprechenden Eingänge der ISAC-Schaltkreise aller Schnittstellenmodule (1) geliefert.

Aus den 8 kHz wird weiter noch im Modul zur Takterzeugung ein symmetrischer Takt erzeugt und an einen Eingang der PIO (92) geliefert.

Mikrorechner (66), ISAC-Schaltkreis im Schnittstellenmodul (1) und SIO im Schnittstellenmodul (2) arbeiten in analoger Weise wie im Master-Gerät zusammen bei der Weiterleitung der B-und D-Kanal-Daten zwischen ISDN-Schnittstelle und X-Kanal.

Vorteilhaft können Einrichtungen zur Protokollwandlung aus Einzeleinrichtungen sowohl mit einem Schnittstellenmodul (1) als auch mit mehreren Schnittstellenmodulen (1) aufgebaut werden. Ein Modeschalter (5) weist dann eine zusätzliche Schaltfunktion für den Betrieb einzelner Einrichtungen zur Protokollwandlung autonom oder die Zuweisung und den gemeinsamen Betrieb ausgewählter Einrichtungen zur Protokollwandlung auf.

Mit dem erfindungsgemäßen Verfahren und der erfindungsgemäßen Vorrichtung ist es möglich, die vielfältigen Dienste des ISDN über die entsprechenden Schnittstellen parallel entsprechend der vorhandenen ISDN-Kanäle über weite Entfernungen weiterzugeben, ohne in ein anderes Netz umsetzen zu müssen. Ein Verbleib im genutzten ISDN-Netz wird damit ermöglicht, wodurch die Qualität der Übertragungsdienste nicht beeinträchtigt wird.

Anhand beigefügter Zeichnungen werden Ausführungsbeispiele der Erfindung näher erläutert. Dabei zeigen

Fig. 1    ein Blockschaltbild einer Einrichtung zur Protokollwandlung
Fig. 2    Darstellung einer Vorrichtung zur Vergrößerung der Reichweite des Übertragungsweges zwischen Funktionseinheiten des ISDN-Teilnehmeranschlusses

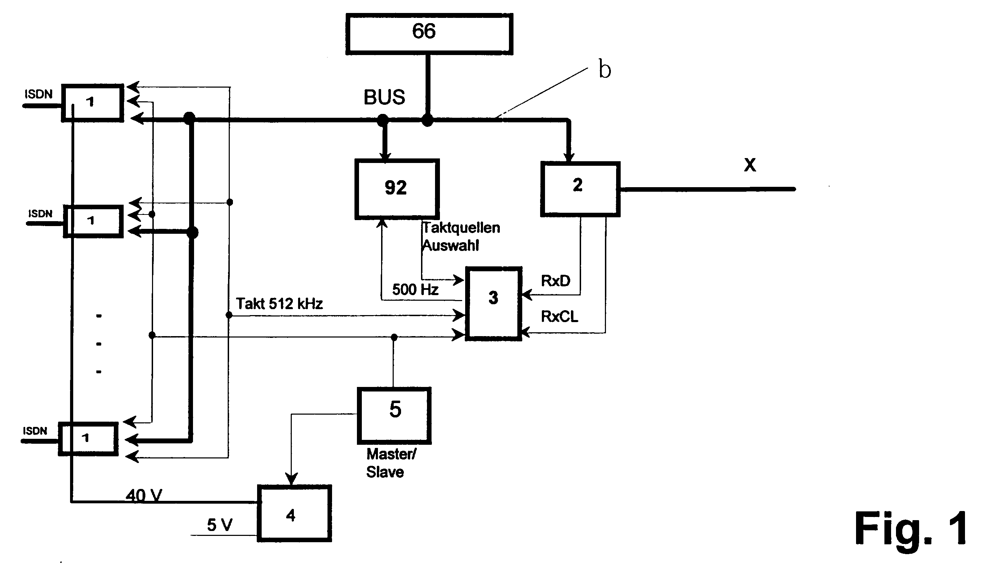

**Fig. 1** zeigt im Blockschaltbild eine Einrichtung zur Protokollwandlung.

Der Mikrorechner (66) besteht aus einem Mikroprozessor, ausgeführt als N80C188XL-20, einem ROM zur Speicherung des Programmkodes, einem RAM als Arbeitsspeicher, und einem BUS.

Über den verlängerten BUS (b) des Mikrorechners ist dieser mit einem als SAB 82532 ausgelegten SIO-Baustein im Schnittstellenmodul (2), mit einer funktionell im SAB 82532 angeordneten PIO-Baugruppe (92) sowie mit dem als PEB 2086 ausgelegten ISAC-Schaltkreis in den Schnittstellenmodulen (1) verbunden.

Der Prozessor im Mikrorechner (66) steuert die Funktion der Bauelemente PIO (92), PEB 2086 und SAB 82532 durch Einstellung der dafür vorgesehenen Register in diesen Bauelementen. Gleichfalls über Register dieser Bauelemente fragt der Prozessor den Zustand dieser Bauelemente ab und tauscht Daten aus.

Die Aktivierung/ Deaktivierung der ISDN-Schnittstelle erfolgt durch den PEB 2086 im Schnittstellenmodul (1). Der Zustand der jeweiligen ISDN-Schnittstelle kann aus Registern des PEB 2086 abgelesen werden. Der Prozessor im Mikrorechner (66) fragt zyklisch die Register der PEB 2086 ab, die den Zustand der jeweiligen ISDN-Schnittstelle anzeigen.

Netzseitig arbeitet die Einrichtung nach Figur 1 im Master -Mode wie folgt:

In den Schnittstellenmodulen (1) erfolgt im ISDN-Interface die wechselseitige Umwandlung der Signalpegel von der ISDN-Schnittstelle auf die vom Baustein PEB 2086 benötigten Signalpegel.

Mittels Modeschalter (5) werden die Bausteine PEB 2086 in allen Schnittstellenmodulen (1) in den TE-Mode (Terminal-Mode) geschaltet. In diesem Mode erzeugt der PEB 2086 einen Takt 512 kHz am Ausgang DCL. Wenn die ISDN-Schnittstelle aktiv ist, so wird der Takt 512 kHz synchron aus dem Bittakt der ISDN-Schnittstelle abgeleitet.

Der Takt 512 kHz jedes Schnittstellenmoduls wird an den Modul zur Takterzeugung (3) geleitet. Durch den Prozessor des Mikrorechners (66) wird der Schnittstellenmodul (1) mit der niedrigsten logischen Adresse bestimmt, dessen ISDN-Schnittstelle aktiv ist. Der Takt 512 kHz vom PEB 2086 genau dieser ISDN-Schnittstelle wird, gesteuert durch den Prozessor, im Modul zur Takterzeugung (3) benutzt, um durch Teilung einen symmetrischen Takt von 500 Hz zu erzeugen.

Der Takt 500 Hz wird auf einen Port der PIO (92) dem Mikrorechner (66) zugeführt.

Der PEB 2086 im Schnittstellenmodul (1) wandelt die ternär kodierten B- und D- Kanal-Signale von der ISDN-Schnittstelle, sofern diese aktiv ist, in binär kodierte Signale um und speichert diese byteweise in seinen Registern ab. Umgekehrt wandelt der Baustein die vom Prozessor des Mikrorechners (66) eingegebenen binär kodierten B- und D-Kanal-Bytes in ternäre Signale um und sendet diese Daten an das Interface des Schnittstellenmoduls (1) zur Übertragung auf die jeweilige ISDN-Schnittstelle.

Der PEB 2086 signalisiert durch ein Register, daß er zur Übernahme je eines neuen B1- und B2-Kanal-Bytes und gleichzeitig je ein vollständiges B1- und B2-Kanal-Byte zur Übernahme durch den Prozessor bereit steht. Der Prozessor des Mikrorechners (66) fragt das Signalisierungs-Register des PEB 2086 zyklisch ab und übernimmt die fertigen B-Kanal-Bytes in seinen Arbeitsspeicher beziehungsweise übergibt die B-Kanal-Bytes.

Der PEB 2086 signalisiert durch ein weiteres Register, wenn ein D-Kanal-Frame von der ISDN-Schnittstelle empfangen wurde. Der Prozessor fragt dieses Signalisierungsbyte ebenfalls zyklisch ab und übernimmt gegebenenfalls den D-Kanal-Frame auf seinen Arbeitsspeicher.

Hat der Prozessor einen D-Kanal-Frame von der Gegenstelle empfangen, dann übergibt er seinerseits diese Bytes an den PEB 2086 zur Weiterleitung auf die ISDN-Schnittstelle.

Aus den vom PEB 2086 übernommenen Bytes bildet der Prozessor des Mikrorechners (66) Blöcke und speichert diese im Arbeitsspeicher RAM zwischen.

Der Prozessor im Mikrorechner (66) erhält von der PIO (92) immer dann ein Interrupt-Signal, wenn sich am Takteingang 500 Hz der PIO (92) der Signalwert ändert. Bei jedem solchen Signal wird der erste Teil eines neuen Blockes an den SAB 82532 im Schnittstellenmodul (2) übergeben und dann ein Steuerregister im SAB 82532 gesetzt, wodurch dieser Baustein veranlaßt wird, die Übertragung dieses Blockes zu beginnen. Der SAB 82532 zeigt im bekannten Register an, wann die nächsten Abschnitte des Blockes übergeben werden sollen, damit die Übertragung nicht abbricht. Der Prozessor liest dieses Register zyklisch und führt dem SAB 82532 entsprechend die weiteren Abschnitte des Blockes zu.

Der Prozessor im Mikrorechner (66) übergibt dem SAB 82532 im Schnittstellenmodul (2) Blöcke in fortlaufender Reihenfolge entsprechend der zyklisch wiederholten logischen Adressen der ISDN-Schnittstellen. Alle aktiven ISDN-Schnittstellen arbeiten synchron auf der Basis des zentralen Netztaktes des ISDN, so daß auch die Blöcke synchron erzeugt werden.

Wenn die ISDN-Schnittstelle nicht aktiv ist, dann bildet der Prozessor im Mikrorechner (66) gleichlange Blöcke fester Länge und überträgt diese anstelle der Datenblöcke.

In umgekehrter Richtung empfängt der SAB 82532 im Schnittstellenmodul (2) bitserielle Daten über das Interface im Schnittstellenmodul (2). Wenn im SAB 82532 der erste Abschnitt eines neuen Blockes oder weitere Abschnitte eines Blockes empfangen wurden, so werden entsprechende Signalisierungsbits in einem Register des SAB 82532 gesetzt. Der Prozessor des Mikrorechners (66) fragt dieses Register zyklisch ab. Wenn der Empfang eines Blockes angezeigt wird, so übernimmt der Prozessor diesen Block abschnittsweise in seinen Arbeitsspeicher RAM. Die Blöcke werden geordnet nach ihrer im Steuerbyte codierten logischen Adresse abgespeichert. Pro logischer Adresse werden jeweils die 2 zuletzt empfangenen Blöcke zwischengepuffert.

Die B-Kanal-Bytes aus den gespeicherten Blöcken werden mit einer mittleren Verzögerung von (2 x n x 16) Bytes, bezogen auf den Zeitpunkt ihres Empfangs, an die PEB 2086 in den Schnittstellenmodulen (1) entsprechend den übereinstimmenden logischen Adressen der Blöcke und Schnittstellenmodule weitergeleitet.

Durch den PEB 2086 im Schnittstellenmodul (1) wird über interne Register signalisiert, daß ein B-Kanal-Byte an den PEB 2086 zu übergeben ist zur Übertragung auf die ISDN-Schnittstelle. Der Prozessor des Mikrorechners (66) fragt diese Register aller PEB 2086 zyklisch ab und übergibt dann entsprechend die B-Bytes an den PEB 2086.

Die D-Kanal-Bytes in den vom Schnittstellenmodul (2) empfangenen Blöcken werden an die bekannten D-Kanal-Register des PEB 2086 im Schnittstellenmodul (1) übergeben. Wenn der D-Kanal-Frame vollständig oder ein Abschnitt von 32 D-Kanal-Byte übergeben ist, dann veranlaßt der Prozessor durch Setzen eines bekannten Registers im PEB 2086 die Übertragung der Bytes durch den PEB 2086 auf die ISDN-Schnittstelle.

Terminalseitig arbeitet die Einrichtung nach Fig. 1 im Slave -Mode wie folgt:

Im Schnittstellenmodul (1) erfolgt im ISDN-Interface die wechselseitige Umwandlung der Signalpegel von der ISDN-Schnittstelle auf die vom Baustein PEB 2086 benötigten Signalpegel.

Durch die Mode-Einstellung (5) wird der Baustein PEB 2086 im Schnittstellenmodul (1) in den NT-Mode (Network-Terminal-Mode) geschaltet. In diesem Mode benötigt der PEB 2086 synchrone Takte an den Eingängen DCL von 512 kHz, FSC1 und FSC2 von 8 kHz. Aus diesen leitet der PEB 2086 die Rahmensynchron - und Bitsynchrontakte für die ISDN-Schnittstelle ab.

Im Modul zur Takterzeugung (3) wird aus der Folge der Zeitpunkte, zu denen die Blöcke vom Mastergerät her eintreffen, ein Takt von 1 kHz abgeleitet. Aus diesem Takt werden im Modul zur Takterzeugung (3) mittels nach bekannten Prinzipien arbeitender PLL ein Takt 512 kHz und daraus durch Teilung ein Takt von 8 kHz erzeugt. Diese Takte werden an die entsprechenden Eingänge der PEB 2086 aller Schnittstellenmodule (1) geliefert.

Aus den 8 kHz wird weiter noch im Modul zur Takterzeugung ein Takt von 500 Hz erzeugt und an einen Eingang der PIO (92) geliefert.

Mikrorechner (66), PEB 2086 im Schnittstellenmodul (1) und SAB 82532 im Schnittstellenmodul (2) arbeiten in analoger Weise wie im Master-Gerät zusammen bei der Weiterleitung der B-und D-Kanal-Daten zwischen ISDN-Schnittstelle und X-Kanal.

Die Stromversorgung des Gerätes erzeugt für die Stromversorgung einer angeschlossenen TE ohne eigene Stromversorgung eine Gleichspannung von 40 V, die über die ISDN-Schnittstelle an die TE weitergeleitet wird.

Die vom Prozessor im Mikrorechner (66) gebildeten Blöcke haben folgende Struktur:

In der Einrichtung zur Protokollwandlung wird in jedem Schnittstellenmodul (1) ein Schaltkreis PEB 2086 zur Kopplung zwischen der ISDN-Schnittstelle (S/T - Reference Point) und Bus (b) genutzt.

Auf jeder aktiven ISDN-Schnittstelle werden pro 1 Millisekunde vier Rahmen a 48 Bit bei einem Bitübertragungstakt von 192 kHz gesendet sowie empfangen. Vier Rahmen enthalten

64 Bit Kanal B1
64 Bit Kanal B2
16 Bit Kanal D.

Diese Daten werden im PEB 2086 des Schnitttstellenmoduls (1) byteweise und getrennt nach Kanälen in entsprechenden internen Registern gespeichert, die über den Bus (b) vom Mikrorechner (66) gelesen werden können.

Auf dem D-Kanal des ISDN werden HDLC-Frames übertragen. Der PEB 2086 speichert nur die D-Kanal-Bytes, die innerhalb eines D-Kanal-Frames empfangen werden.

Für die Übertragung auf dem X-Kanal werden im Mikrorechner (66) parallel (zeitmultiplex) für jedes Schnittstellenmodul (1) pro n Millisekunden jeweils ein Block gebildet und auf dem Arbeitsspeicher (RAM) zwischengespeichert. Pro Millisekunde wird demnach ein Block von jeweils 8 Byte B1 und 8 Byte B2 gebildet.

Bsp:

B1.1IB2.1IB1.2IB2.2IB1.3IB2.3IB1.4IB2.4IB1.5IB2.5IB1.6IB2.6IB1.7IB2.7IB1.8IB2.8

Diese Blöcke, im nachfolgenden mit GB bezeichnet, werden gemäß der Anzahl n der verwendeten Schnittstellenmodule (1) n-mal aneinander gereiht und soweit vorhanden, um 2 x n D-Bytes ergänzt. Vorgestellt wird ein Steuerbyte S, indem der logische Kanal und der mögliche Beginn eines D-Kanal-Frames kodiert sind.

Blockstruktur:

SIGB1IGB2IGB3I...IGBnID1I...IDiIDi+1I...IDj

Die Anzahl i+j der D-Bytes ist maximal 2 x n und größer 0, wenn D-Frames zu übertragen sind. S ist ein Steuerbyte, in welchem die logische Adresse des Schnittstellenmoduls (1) sowie der Wert i kodiert ist, welcher anzeigt, daß Di das letzte Byte des vorhergehenden D-Frames und Di+1 das erste Byte eines nachfolgenden neuen D-Frames ist.

Zwischen den Blöcken werden Flags (mindestens 1 Flag) als Trennzeichen übertragen. Der X-Kanal muß entsprechend in beiden Richtungen eine Übertragungsrate von mindestens

$$[18 \text{ x } n + 1] \text{ x } 8 \text{ kBit/s besitzen.}$$

In der netzseitig angeschlossenen Einrichtung ist jeder PEB 2086 auf TE-Mode programmiert und liefert damit einen Takt von 512 kHz, der synchron aus dem Bitübertragungstakt der ISDN-Schnittstelle und damit synchron zum Netztakt des ISDN abgeleitet ist. Aus einem dieser Takte werden im Steuermodul synchrone Takte von 1 kHz und n x 160 kHz abgeleitet.

Synchron zum 1 kHz-Takt werden von der netzseitig angeschlossenen Einrichtung die Datenblöcke auf dem X-Kanal an die teilnehmerseitig angeschlossene Einrichtung übertragen.

Die Übertragung kann wahlweise

a) mit einem von der Übertragungseinrichtung gelieferten Bittakt oder
b) mit dem in der Einrichtung gebildeten Takt von n x 160 kHz

erfolgen, was durch einen Schalter vorgegeben werden kann.

In der teilnehmerseitig angeschlossenen Einrichtung zur Protokollwandlung ist jeder PEB 2086 aufNT-Mode programmiert und benötigt damit synchrone Takte von 512 kHz und 8 kHz. Diese Takte werden wahlweise entweder aus der zeitlichen Aufeinanderfolge der empfangenen Blöcke oder, sofern mit dem Bitübertragungstakt entsprechend (b) gearbeitet wird, aus dem empfangenen Bittakt mittels einer PLL abgeleitet. Diese Takte sind synchron zu dem 512 kHz-Takt in der netzseitig angeschlossenen Einrichtung. Der PEB 2086 bildet aus diesen Takten den ISDN-Rahmentakt von 4 kHz und den Bittakt von 192 kHz. Damit wird die Synchronität der teilnehmerseitigen ISDN-Endgeräte mit dem ISDN gesichert.

Die Datenblöcke der oben dargestellten Struktur werden in der Reihenfolge ihrer Bildung auf dem Modem-Kanal zwischen den beiden Einrichtungen Übertragen. Die empfangenen Blöcke werden im Arbeitsspeicher zwischengespeichert. Die B- und D-Kanal-Bytes der Blöcke werden entsprechend der logischen Nummer der Blöcke vom Zwischenspeicher auf die dafür vorgesehenen Register des PEB 2086 des jeweiligen Schnittstellenmoduls (1) übertragen. Der PEB 2086 überträgt diese Daten auf die ISDN-Schnittstelle entsprechend der Takt- und Rahmenstruktur.

Wenn die ISDN-Schnittstelle nicht aktiv ist, dann bildet der Prozessor im Mikrorechner (66) gleichlange Blöcke fester Länge mit folgender Struktur:

S-Byte (Kanal)IISAC-S-ZustandsbyteIISAC-S-ZustandsbyteI..I..I..I..I..I..I

Im S-Byte wird lediglich der logische Kanal angezeigt. Das Zustandsbyte wird vom PEB 2086-Schaltkreis geliefert und zeigt den Zustand der ISDN-Schnittstelle an. Das Zustandsbyte wird im Ausführungsbeispiel wiederholt und der Block wird auf 9 Bytes aufgefüllt. Die 6 Bytes zur Auffüllung tragen keine relevanten Informationen.

Bei der Blockübertragung wird zur sicheren Unterscheidung der Flags (01111110) von den Informationsbytes in den Blöcken dort eine "0" im Bitstrom eingefügt, wo mehr als 5 mal "1" aufeinander folgen. Dadurch wird die real notwendige Bitrate größer. Um die Wahrscheinlichkeit für diese Erscheinung zu senken, werden die Blöcke vor der Übertragung XOR-verknüpft mit der Bytefolge 0 x 55, 0 x AA,....

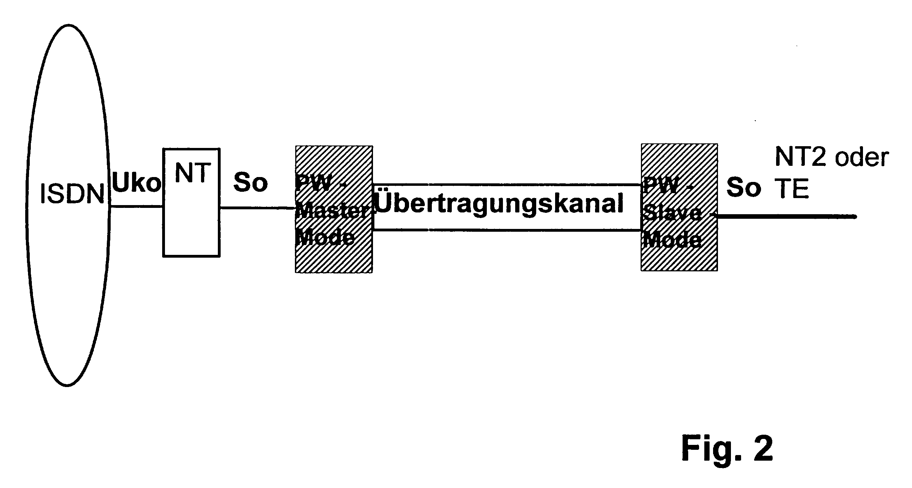

**Fig. 2** gibt eine Vorrichtung zur Vergrößerung der Reichweite des Übertragungsweges zwischen Funktionseinheiten des ISDN-Teilnehmeranschlusses bezogen auf eine $S_o$-Schnittstelle wieder. Ausgehend von einem Netz ISDN, über eine Schnittstelle Uko zu einem Netzabschluß NT ist netzseitig an der Schnittstelle $S_o$ eine Einrichtung zur Pro-

tokollwandlung PW nachgeordnet, der über einen Übertragungskanal mit einer Einrichtung zur Protokollwandlung PW terminalseitig kommuniziert und die Schnittstelle $S_o$ terminalseitig bereitstellt. Terminalseitig können dann beispielsweise ein Vermittlungsanlage (NT2) oder sofort Endgeräte (TE) betrieben werden.

Das $S_o$-netzseitig angeschlossene Gerät arbeitet im Master-Mode, das $S_o$-terminalseitig angeschlosse Gerät arbeitet im Slave-Mode. Das im Master-Mode arbeitende Gerät verhält sich zum ISDN-Netz hin wie ein Endgerät (TE), das im Slave-Mode arbeitende Gerät wie ein Netzwerkabschluß (NT).

Zwischen beiden über den Übertragungskanal verbundenen Einrichtungen zur Protokollwandlung (PW) erfolgt der Datenaustausch mittels bitserieller synchroner Übertragung von Datenblöcken von jeweils 16 B-Kanal-Bytes plus maximal 2 D-Kanal Bytes.

Die Einrichtung zur Protokollwandlung PW im Master-Mode aktiviert die $S_o$-Schnittstelle immer wieder neu, wenn diese nicht aktiv ist. Sie überträgt nur dann Blöcke, wenn die $S_o$-Schnittstelle aktiv ist.

Die Einrichtung zur Protokollwandlung PW im Slave-Mode aktiviert die $S_o$-Schnittstelle dann neu, wenn diese nicht aktiv ist und das Gerät zugleich auch Datenblöcke vom Master-Gerät empfängt. Sie deaktiviert die $S_o$-Schnittstelle, wenn sie für eine Sekunde keine Blöcke vom Master-Gerät empfängt.

**Patentansprüche**

1. Verfahren zum Vergrößern der Reichweite des Übertragungsweges zwischen Funktionseinheiten des ISDN-Teilnehmeranschlusses derart, daß bezogen auf eine oder mehrere gleichartige ISDN-Schnittstellen

   a) die Datensendung netzseitig so erfolgt, daß die an den jeweiligen ISDN-Schnittstellen auflaufenden ISDN-spezifisch kodierten Daten mittels jeweils eines Kodewandlers in binär kodierte Daten getrennt nach B- und D-Kanalinformationen umgewandelt werden,

   b) aus den auflaufenden binär kodierten Daten der B- und D-Kanäle mittels einer Speichereinrichtung Blöcke für die jeweilige ISDN-Schnittstelle, ergänzt um eine Kennzeichnung für diese Schnittstelle, gruppiert und einem Übertragungsmittel in aus dem ISDN-spezifischen Takt einer festgelegten ISDN-Schnittstelle abgeleiteten Zeitabständen nacheinander zugeführt und über ein Übertragungsmittel der Empfängerseite bitweise getaktet entweder mit einem unabhängigen erzeugten Takt oder mit einem aus dem ISDN-spezifischen Takt abgeleiteten Takt übermittelt werden,

   c) terminalseitig mittels eines Taktrückgewinnungsmittels entweder aus der zeitlichen Abfolge der empfangenen Datenblöcke oder aus der zeitlichen Abfolge der über-tragenen Datenbits, die zur Kommunikation von Sender und Empfänger notwendigen ISDN-spezifischen Takte zurückgewonnen werden und

   d) die empfangenen Blöcke entsprechend ihrer Kennzeichnung in einer Speichereinrichtung zwischengespeichert werden, der betreffenden ISDN-Schnittstelle zugeordnet und übergeben werden und anschließend die B-Kanalinformation entsprechend dem rückgewonnenen Takt und die D-Kanalinformation, sofern vorhanden, dem Kodewandler zugeführt und die binär kodierten Daten in ISDN-spezifisch kodierte Daten umgewandelt werden und

   e) terminalseitig die Datensendung analog der Verfahrensschritte a) und b) erfolgt, wobei der in b) benannte ISDN-spezifische Takt derjenige ist, der nach Verfahrens-schritt c) zurückgewonnen wird und

   f) netzseitig die empfangenen Datenblöcke entsprechend ihrer Kennzeichnung der Speichereinrichtung der betreffenden ISDN-Schnittstellen zugeordnet und übertragen werden und mittels eines Kodewandlers entsprechend dem netzseitig vorgegebenen ISDN-spezifischen Takt die Umwandlung der binär kodierten Daten in ISDN-spezifisch kodierte Daten erfolgt.

2. Verfahren nach Anspruch 1, dadurch gekennzeichnet, daß die Blockbildung gemäß Schritt b des Verfahrens so erfolgt, daß die gebildeten Blöcke gleiche Länge haben und B-Kanal- und D-Kanaldaten ein Teilungsverhältnis aufweisen, das dem Verhältnis der Kapazitäten von B- und D-Kanälen entspricht.

3. Verfahren nach Anspruch 1, dadurch gekennzeichnet, daß gemäß Schritt b des Verfahrens gleichlange Blöcke ohne D-Kanaldaten in den Zeiten gebildet werden, in denen der D-Kanal keine Information trägt.

4. Verfahren nach Anspruch 1, dadurch gekennzeichnet, daß gemäß Schritt b) in den Zeiten, in denen die ISDN-Schnittstelle n nicht aktiv ist, die Blockbildung in der Weise erfolgt, daß gleichlange Blöcke fester Länge gebildet werden.

5. Verfahren nach Anspruch 1, dadurch gekennzeichnet, daß die gemäß Schritt b) gebildeten Blöcke mit einem Byte wechselnder Bitwertigkeit über ein exklusives Oder verknüpft werden.

6. Verfahren nach Anspruch 1, dadurch gekennzeichnet, daß die Taktrückgewinnung nach Schritt c des Verfahrens im Falle dessen, daß das Übertragungsmittel den Übertragungstakt selbst bestimmt, in der Form erfolgt, daß aus der zeitlichen Abfolge der empfangenen Datenblöcke ein Vergleichstakt gewonnen wird, mittels dessen nach bekannten Prinzipien ein Grundtakt erzeugt und aus dem der Takt für die ISDN-Schnittstelle terminalseitig abgeleitet wird.

7. Verfahren nach Anspruch 1, dadurch gekennzeichnet, daß bei Vorgabe des Bittaktes durch eine das Verfahren realisierende Einrichtung die Taktrückgewinnung nach Schritt c) des Verfahrens aus dem Bitübertragungstakt erfolgt.

8. Verfahren nach Anspruch 1, dadurch gekennzeichnet, daß bei einer übertragungsmittelbedingten Überschreitung der ISDN-standardisierten Signallaufzeit der D-Kanal-Signalisierung dem aktivierenden Teilnehmer signalisiert wird, daß die Verbindung noch nicht aufgebaut ist.

9. Vorrichtung zur Vergrößerung der Reichweite des Übertragungsweges zwischen Funktionseinheiten des ISDN-Teilnehmeranschlusses, bezogen auf ein oder mehrere gleichartige ISDN-Schnittstellen, dadurch gekennzeichnet, daß diese aus terminal- und netzseitig mit den ISDN-Schnittstellen verbundenen Einrichtungen zur Protokollwandlung und diesen zugeordnetem Übertragungskanal aus Übertragungseinrichtung und Übertragungsmedium besteht und die Einrichtungen zur Protokollwandlung über den zugeordneten Übertragungskanal miteinander kommunizieren, daß die Einrichtungen zur Protokollwandlung im wesentlichen aus entsprechend der Zahl der zu verbindenden Schnittstellen angeordneten Schnittstellenmodulen (1), einem Mikrorechner (66), einem Schnittstellenmodul (2) für den Übertragungskanal(X), einem Modul zur Taktgenerierung (3), einer PIO (92), einer Stromversorgung (4), sowie entsprechenden elektrischen Verbindungen und einem Bus für den Adress- und Datenaustausch bestehen, wobei die Schnittstellenmodule (1) geeignet sind, sowohl ISDN-spezifisch kodierte Daten in binär kodierte Daten als auch umgekehrt binär kodierte Daten in ISDN-spezifisch kodierte Daten umzuwandeln, wobei der Mikrorechner (66) über den Bus mit den ISDN-Schnittstellenmodulen (1) und mit dem parallelen Input-Output-Baustein PIO (92) sowie mit dem Schnittstellen-modul (2) für den Anschluß an den Übertragungskanal (X) verbunden und geeignet ist, aus den an den Schnittstellenmodulen (1) auflaufenden binär kodierten Daten Blöcke zu gruppieren und in Verbindung mit der PIO (92) mit dem Schnittstellenmodul (2) auszutauschen sowie geeignet ist, vom Schnittstellenmodul (2) empfangene Datenblöcke in Verbindung mit der PIO (92) zu übernehmen und an die Schnittstellenmodule (1) zu übergeben, und wobei der Modul zur Taktgenerierung (3) mit den Schnittstellenmodulen (1), und mit dem Schnittstellenmodul (2) für den Anschluß an den Übertragungskanal (X) sowie über den PIO-Baustein (92) mit dem Mikrorechner (66) über den Bus (b) verbunden und geeignet ist, aus der zeitlichen Abfolge der empfangenen Datenblöcke oder der zeitlichen Abfolge der übertragenen Datenbits die zur Kommunikation von Sender und Empfänger notwendigen ISDN-spezifischen Takte zurückzugewinnen.

10. Vorrichtung nach Anspruch 9, dadurch gekennzeichnet, daß die Einrichtungen zur Protokollwandlung sowohl im Master- als auch Slavemode oder im Master- oder im Slavemode aufgebaut sind, wobei die netzseitig angeschlossene Einrichtung zur Protokollwandlung im Mastermode und die terminalseitig angeschlossene Einrichtung zur Protokollwandlung im Slavemode geschaltet ist.

11. Vorrichtung nach Anspruch 9 und 10, dadurch gekennzeichnet, daß die Einrichtungen zur Protokollwandlung einen Modeschalter (5) für die Modeeinstellung (Master/Slave) aufweisen, der mit der Stromversorgung (4), den Schnittstellenmodulen (1) und dem Modul (3) zur Taktgenerierung in Wirkverbindung steht, die Stromversorgung (4) die Schaltung mit Spannung versorgt und bei Funktion der Einrichtung zur Protokollwandlung im Slavemode die Versorgungsspannung für netzunabhängige Endgeräte erzeugt.

12. Vorrichtung nach Anspruch 9, dadurch gekennzeichnet, daß die Einrichtungen zur Protokollwandlung aus Einzeleinrichtungen sowohl mit einem Schnittstellenmodul (1) als auch mit mehreren Schnittstellenmodulen (1) aufgebaut sind und ein Modeschalter (5) eine zusätzliche Schaltfunktion aufweist für den Betrieb einzelner Einrichtungen zur Protokollwandlung autonom oder die Zuweisung und den gemeinsamen Betrieb ausgewählter Einrichtungen zur Protokollwandlung.

13. Vorrichtung nach einem der Ansprüche 9 bis 12, dadurch gekennzeichnet, daß das Schnittstellenmodul (1) aus einem Schnittstellen-Interface und aus einem Schaltkreis zur Wandlung der ISDN-spezifisch kodierten Daten in binär kodierte Daten aufgebaut ist.

14. Vorrichtung nach einem der Ansprüche 9 bis 12, dadurch gekennzeichnet, daß das Schnittstellenmodul (2) aus einem als SIO-Baustein ausgeführten Schaltkreis und einem Interface besteht.

15. Vorrichtung nach einem der Ansprüche 9 bis 12, dadurch gekennzeichnet, daß das Modul zur Takterzeugung (3) als PLL-Schaltung aufgebaut ist.

## Claims

1. Process for the enlargement of the range of the transmission channel between functional groups of the ISDN user interface with reference to one or more similar ISDN interfaces comprising:

   a) providing for data transmission from the net side by converting the ISDN-specific coded data arriving at the respective ISDN interface into a binary coded data form, separated in accordance with B and D channel information, prior to transmission from the net side

   b) grouping (by way of a buffer arrangement) the arriving binary coded data, supplemented with an address designation for the respective interface, of the B and D channels into blocks and delivering the data blocks to a transmission means sequentially with a timing derived from the ISDN-specific timing of a particular ISDN interface and transmitting by the transmission means to the receiver side with a bit timing derived either from an independently produced timing or a bit timing derived from an ISDN-specific timing,

   c) deriving, at the terminal side, the ISDN-specific timing required for communication between transmitter and receiver either through the arrival sequence of the received data blocks or the arrival sequence of the transmitted data bits, and

   d) storing the received data blocks in accordance with their addresses in a buffer, and sequentially transmitting the data to the designated ISDN interface and subsequently furnishing the B channel information in accordance with the derived timing, and the D channel information, if any, to a code converter which changes the binary coded data into ISDN-specific coded data, and

   e) transmitting the data from the terminal side in a fashion analogous to steps a) and b) wherein the ISDN-specific timing mentioned in step b) is the one derived in accordance with process step c), and

   f) allocating and transmitting the data blocks received on the net side in accordance with their address to a buffer of the respective ISDN interface where a conversion of the binary coded data into ISDN-specific coded data occurs in accordance with the ISDN-specific timing of the interface of the net side.

2. Process according to claim 1, characterized in that the block formation in accordance with step b) of the process is performed in such a manner that the formed blocks have equal lengths and that the B and the D channel data exhibits a partition that is related to the capacities of the B and D channels.

3. Process according to claim 1, characterized in that in accordance with step b) of the process equal length blocks are formed without D channel data in those time periods where the D channel carries no information.

4. Process according to claim 1, characterized in that in accordance with step b) the block formation, during those times in which the ISDN interface n is not active, equal length blocks of fixed length are formed.

5. Process according to claim 1, characterized in that the blocks formed in accordance with step b) are associated with a byte of alternating bit value through an exclusive OR.

6. Process according to claim 1, characterized in that the timing recovery in accordance with step c) of the process, in the case where the transmission means determines the transmission timing, occurs through a comparison timing derived from the sequential arrival of the received data blocks from which, in accordance with known principles, a base timing is produced from which the timing for the ISDN interface on the terminal side is derived.

**7.** Process according to claim 1, characterized in that the timing recovery in accordance with step c) of the process follows from the bit transmission timing when the bit timing is furnished by an apparatus to practice the process.

**8.** Process according to claim 1, characterized in that when the transmission delay because of the transmission means is in excess of the ISDN standardized signal delay of the D-channel signalization, the activating user is advised that the connection has not yet been established.

**9.** Apparatus for the enlargement of the range of the transmission channel between functional groups of the ISDN network, with reference to one or more similar ISDN interfaces, characterized in that, equipment is located both at the net and terminal side comprised of means for protocol conversion and appropriate transmission equipment and transmission medium, and wherein the equipment for protocol conversion communicate with one another over the appropriate channel, wherein the equipment for protocol conversion comprises, for each of the interface to be connected, an interface module (1), a microcomputer (66), an interface module (2) for transmission channel X, a timing generation module (3), a PIO (92), a power supply (4), as well as the corresponding electrical connections and a bus for the address and data exchange, whereby the interface module (1) is adapted to convert ISDN-specific coded data into binary coded data as well as converting binary coded data into ISDN coded data, wherein the microcomputer (66) is connected via a bus with the ISDN interface module (1) and the parallel input/output PIO (92) as well as with the interface module (2) and is adapted for connection with the transmission channel X and which is also adapted to form blocks from the binary coded data arriving at the interface module (1) and, over a connection with the PIO (92), to exchange data with the interface module (2), and which is also adapted to receive data blocks from interface module (2) in combination with the PIO (92) and to transmit these to the interface module (1), and wherein the timing generation module (3) is connected with interface modules (1) and the interface module (2) for connection to the transmission channel X as well as with the PIO (92) connected to the microcomputer (66) over the bus (b) and adapted to regenerate the ISDN-specific timing from the sequential arrival of the received data blocks or the sequential arrival of the data bits so that communication between sender and receiver can occur.

**10.** Apparatus according to claim 9, characterized in that the apparatus for protocol conversion can function in master as well as slave mode, or in master, or in slave mode, wherein the apparatus for protocol conversion connected to the net side functions in master mode and the apparatus for code conversion on the terminal side functions in slave mode.

**11.** Apparatus according to claims 9 and 10, characterized in that the apparatus for protocol conversion comprises a mode switch (5) for adjusting the master/slave condition connected with a power supply (4), the interface modules (1) and the timing generation module (3), and in which the power supply (4) supplies the apparatus with voltage and supplies the voltage for the mains-independent terminals when the apparatus for protocol conversion functions in the slave mode.

**12.** Apparatus according to claim 9, characterized in that the apparatus for protocol conversion is comprised of apparatus connected with one or more interface modules (1) and wherein the mode switch (5) possesses an additional function for the autonomous operation of individual protocol converters or for the supply and the common operation of selected apparatus for code conversion.

**13.** Apparatus according to any one of claims 9 through 12, characterized in that the interface module (1) is comprised of an interface and a circuit for the conversion of ISDN-specific coded data into binary coded data.

**14.** Apparatus according to any one of claims 9 through 12, characterized in that the interface module (2) is comprised of an SIO circuit and an interface.

**15.** Apparatus according to any one of claims 9 through 12, characterized in that the timing generation module (3) is comprised of a PLL circuit.

**Revendications**

**1.** Procédé pour accroître la portée de la voie de transmission entre des unités fonctionnelles de l'accès d'abonné au RNIS, de manière que, par rapport à une jonction RNIS ou à plusieurs jonctions RNIS de même type,

a) l'émission de données côté réseau s'effectue de manière que les données à codage RNIS spécifique arrivant aux jonctions RNIS respectives soient converties chaque fois au moyen d'un convertisseur de code en données codées binaires séparées en information de canal B et information de canal D

b) à partir des données codées binaires arrivantes des canaux B et D soient formés, par groupage, des blocs pour la jonction RNIS correspondante complétés par une identification de cette jonction, et amenés l'un après l'autre à un moyen de transmission avec des intervalles de temps dérivés du rythme RNIS spécifique d'une jonction RNIS déterminée, et soient transférés bit par bit, de façon rythmée, par un moyen de transmission, au côté récepteur, soit à un rythme indépendant généré, soit à un rythme dérivé du rythme RNIS spécifique,

c) côté terminal, par un moyen de récupération de rythme, les rythmes RNIS spécifiques nécessaires à la communication de l'émetteur et du récepteur soient récupérés, soit à partir de la succession dans le temps des blocs de données reçus, soit à partir de la succession dans le temps des bits de données transmis,

d) les blocs reçus soient mémorisées temporairement, selon leur identification, dans un dispositif de mémoire, coordonnés et transmis à la jonction RNIS concernée et, ensuite, l'information de canal B, selon le rythme récupéré, et l'information de canal D, dans la mesure où elle est présente, soient amenées au convertisseur de code et les données codées binaires soient converties en données à codage RNIS spécifique,

e) côté terminal, l'émission de données s'effectue de façon analogue aux étapes de procédé a) et b), le rythme RNIS spécifique mentionné en b) étant celui récupéré selon l'étape de procédé c) et

f) côté réseau, les blocs de données reçus soient coordonnés et transmis, selon leur identification, au dispositif de mémoire des jonctions RNIS concernées et, au moyen d'un convertisseur de code et en conformité avec le rythme RNIS spécifique préfixé côté réseau, les données codées binaires soient converties en données à codage RNIS spécifique.

2. Procédé selon la revendication 1, caractérisé en ce que la formation de blocs selon l'étape b) du procédé s'effectue de manière que les blocs formés possèdent la même longueur et les données de canal B et de canal D présentent un rapport de partage correspondant au rapport des capacités des canaux B et D.

3. Procédé selon la revendication 1, caractérisé en ce que, en conformité avec l'étape b) du procédé, des blocs de même longueur sans données de canal D sont formés dans les temps où le canal D ne porte pas d'information.

4. Procédé selon la revendication 1, caractérisé en ce que, en conformité avec l'étape b), dans les temps où la jonction RNIS n'est pas active, la formation de blocs s'effectue de manière que des blocs de même longueur soient formés avec une longueur fixe.

5. Procédé selon la revendication 1, caractérisé en ce que les blocs formés selon l'étape b), sont soumis à une conjonction logique avec un octet de valeur de bit alternante par un élément OU exclusif.

6. Procédé selon la revendication 1, caractérisé en ce que la récupération du rythme selon l'étape c) du procédé s'effectue, au cas où le moyen de transmission détermine lui-même le rythme de transmission, de manière qu'à partir de la succession dans le temps des blocs de données reçus soit obtenu un rythme de comparaison au moyen duquel est généré, selon des principes connus, un rythme de base et à partir duquel est dérivé, côté terminal, le rythme pour la jonction RNIS.

7. Procédé selon la revendication 1, caractérisé en ce que, au cas où le rythme binaire est préfixé par un dispositif de mise en oeuvre du procédé, la récupération du rythme selon l'étape c) du procédé s'effectue à partir du rythme de transmission binaire.

8. Procédé selon la revendication 1, caractérisé en ce que, dans le cas d'un dépassement, dû au moyen de transmission, du temps de propagation du signal, standardisé pour RNIS, de la signalisation de canal D, il est signalé à l'abonné activant que la liaison n'est pas encore établie.

9. Dispositif pour accroître la portée de la voie de transmission entre des unités fonctionnelles de l'accès d'abonné RNIS, par rapport à une jonction RNIS ou à plusieurs jonctions RNIS de même type, caractérisé en ce qu'il est constitué de dispositifs, connectés côté terminal et côté réseau aux jonctions RNIS, pour la conversion de protocole, ainsi que d'un canal de transmission coordonné à ces dispositifs et composé d'un dispositif de transmission et d'un support de transmission, les dispositifs pour la conversion de protocole communiquant entre eux par le canal de transmission coordonné, que les dispositifs pour la conversion de protocole sont formés essentiellement de modules de jonction (1), prévus selon le nombre de jonctions à connecter, d'un microcalculateur (66), d'un module de jonction (2) pour le canal de transmission (X), d'un module pour la génération du rythme (3), d'un composant d'entrée-sortie parallèle ou composant PIO (92), d'une alimentation (4), ainsi que de liaisons électriques correspondantes et d'un bus pour l'échange d'adresses et de données, les modules de jonction (1) convenant à la fois pour convertir des données à codage RNIS spécifique en données codées binaires et pour, à l'inverse, convertir des données codées binaires en données à codage RNIS spécifique, le microcalculateur (66) étant relié à travers le bus aux modules de jonction RNIS (1) et au composant PIO (92), ainsi qu'au module de jonction (2) pour le raccordement au canal de transmission (X), et convenant pour former, par groupage, des blocs à partir des données codées binaires arrivant aux modules de jonction (1) et pour les échanger, en combinaison avec le composant PIO (92), avec le module de jonction (2), de même que pour, en combinaison avec le composant PIO (92), prendre en charge des blocs de données reçus du module de jonction (2) et les transférer aux modules de jonction (1), le module pour la génération du rythme (3) étant relié aux modules de jonction (1) et au module de jonction (2) pour le raccordement au canal de transmission (X) ainsi que, à travers le composant PIO (92), au microcalculateur (66) à travers le bus (b), et convenant pour récupérer, à partir de la succession dans le temps des blocs de données reçus ou de la succession dans le temps des bits de données transmis, les rythmes RNIS spécifiques nécessaires à la communication de l'émetteur et du récepteur.

10. Dispositif selon la revendication 9, caractérisé en ce que les dispositifs pour la conversion de protocole sont conçus pour fonctionner à la fois dans le mode maître et dans le mode esclave ou alors dans le mode maître ou le mode esclave, le dispositif raccordé côté réseau pour la conversion de protocole étant connecté pour fonctionner dans le mode maître et le dispositif raccordé côté terminal pour la conversion de protocole étant connecté pour fonctionner dans le mode esclave.

11. Dispositif selon les revendications 9 et 10, caractérisé en ce que les dispositifs pour la conversion de protocole comportent un commutateur de mode (5) pour établir le mode de fonctionnement (maître/esclave), commutateur qui est en liaison fonctionnelle avec l'alimentation (4), les modules de jonction (1) et le module (3) pour la génération du rythme, l'alimentation (4) fournissant la tension au circuit, de même que, en cas de fonctionnement du dispositif pour la conversion de protocole dans le mode esclave, la tension d'alimentation pour des équipements d'extrémité indépendants du réseau.

12. Dispositif selon la revendication 9, caractérisé en ce que les dispositifs pour la conversion de protocole sont constitués de dispositifs individuels possédant à la fois un module de jonction (1) et plusieurs modules de jonction (1), et un commutateur de mode (5) présente une fonction de commutation supplémentaire pour faire fonctionner des dispositifs individuels en vue de la conversion de protocole autonome ou pour l'affectation et le fonctionnement collectif de dispositifs sélectionnés en vue de la conversion de protocole.

13. Dispositif selon une des revendications 9 à 12, caractérisé en ce que le module de jonction (1) est réalisé d'une interface de jonction et d'un circuit pour convertir les données à codage RNIS spécifique en données codées binaires.

14. Dispositif selon une des revendications 9 à 12, caractérisé en ce que le module de jonction (2) est formé d'un circuit réalisé comme un composant d'entrée-sortie sérielle ou composant SIO et d'une interface.

15. Dispositif selon une des revendications 9 à 11, caractérisé en ce que le module pour la génération du rythme (3) est réalisé comme une boucle d'asservissement de phase (PLL).

Fig. 1

EP 0 749 669 B1

ISDN Uko NT So PW - Master Mode Übertragungskanal PW - Slave Mode So NT2 oder TE

EP 0 749 669 B1

**Fig. 2**

Fig. 3